# EUROPÄISCHE PATENTSCHRIFT

(11) **EP 1 757 632 B1**
(45) Veröffentlichungstag und Bekanntmachung des Hinweises auf die Patenterteilung: **26.11.2008**
(21) Anmeldenummer: 06016778.0
(22) Anmeldetag: 11.08.2006
(51) Int. Cl.: C08G 18/08, C08G 18/10, C08G 18/66

(54) **Verfahren zur Herstellung von thermoplastisch verarbeitbaren Polyurethanen**
Process for preparing thermoplastic polyurethanes
Procédé pour produire de polyuréthanes thermoplastiques

(30) Priorität: 24.08.2005 DE 102005039933
(43) Veröffentlichungstag der Anmeldung: 28.02.2007
(73) Patentinhaber: Bayer MaterialScience AG, 51368 Leverkusen (DE)
(72) Erfinder: Bräuer, Wolfgang, Dr., 51375 Leverkusen (DE); Kaufhold, Wolfgang, Dr., 51061 Köln (DE); Heidingsfeld, Herbert, 50226 Frechen (DE)

(56) Entgegenhaltungen:
- EP-A1- 0 816 407
- EP-A2- 0 135 111
- DE-A1- 2 248 382

## Beschreibung

Die Erfindung betrifft ein mehrstufiges Verfahren zur Herstellung von thermoplastisch verarbeitbaren Polyurethanen mit verbessertem Verarbeitungsverhalten, insbesondere mit verbesserter Homogenität.

Thermoplastische Polyurethan-Elastomere (TPU) sind seit langem bekannt. Sie sind aufgrund der Kombination hochwertiger mechanischer Eigenschaften mit den bekannten Vorteilen der kostengünstigen thermoplastischen Verarbeitbarkeit von technischer Bedeutung. Durch die Verwendung unterschiedlicher chemischer Aufbaukomponenten lässt sich eine große Variationsbreite mechanischer Eigenschaften erzielen. Eine Übersicht über TPUs, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPUs werden aus linearen Polyolen, meist Polyester- oder Polyether-Polyolen, organischen Diisocyanaten und kurzkettigen Diolen (Kettenverlängerern) aufgebaut. Über die Polyole lassen sich eine Vielfalt von Eigenschaftskombinationen gezielt einstellen. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte im Bereich von 60 Shore A bis 75 Shore D.

Der Aufbau der thermoplastisch verarbeitbaren Polyurethanelastomeren kann entweder schrittweise (Prepolymerdosierverfahren) oder durch die gleichzeitige Reaktion aller Komponenten in einer Stufe (one-shot-Dosierverfahren) erfolgen.

Die TPUs können kontinuierlich oder diskontinuierlich hergestellt werden. Die bekanntesten technischen Herstellverfahren sind das Bandverfahren (GB-A 1 057 018) und das Extruderverfahren (DE-A 19 64 834, DE-A 23 02 564 und DE-A 20 59 570).

Zur Verbesserung des Verarbeitungsverhaltens ist bei Spritzgießartikeln eine schnelle Entformbarkeit und bei Extrusionsprodukten eine erhöhte Schmelze-, Schlauch- und Profil-Standfestigkeit bei leichtem Aufschmelzen des TPU's von großem Interesse. Die Morphologie der TPU's, das heißt, das spezielle Rekristallisationsverhalten, ist für das Entformungsverhalten und die Standfestigkeit von ausschlaggebender Bedeutung. Zusätzlich sollten für eine gute Homogenität Nebenreaktionen, insbesondere auf der NCO-Seite (Bildung von Allophanaten, Biureten und Triisocyanuraten) vermieden werden.

In EP-A 0 571 830 wird beschrieben, wie man in einem einfachen Batch-Verfahren durch Umsetzung von 1 mol Polyol mit 1,1 bis 5,0 mol Diisocyanat, Einmischen des restlichen Diisocyanates und anschließender Kettenverlängerung ein TPU mit einer gegenüber den im Standardverfahren hergestellten TPU deutlich erhöhten Rekristallisationstemperatur erhält. Damit werden TPU mit verbesserter Entformbarkeit und Standfestigkeit des Folienschlauches erhalten. Die so erhaltenen Produkte ergeben aber aufgrund des Herstellverfahrens stippige Folien und sind damit nicht für die Extrusionsverarbeitung geeignet. Nachteilig für die Verarbeitung sind ebenfalls die erhöhten Aufschmelztemperaturen, insbesondere bei einem in den Beispielen beschriebenen Diisocyanat/Polyol-Verhältnis von 1,5 bis 2,0.

In DE-A 2 248 382 wird ein anderes Weichsegment-Prepolymerverfahren beschrieben. Durch die Reaktion eines Überschusses von 1 mol Polyol mit 0,2 bis 0,7 mol eines von 4,4'-Diphenylmethandiisocyanat verschiedenen Diisocyanats wird ein OH-terminiertes Prepolymer erzeugt, dem im Folgeschritt ein Kettenverlängerer zugesetzt wird und das mit einem vom 1. Schritt verschiedenen Diisocyanat umgesetzt wird (wahlweise ein- oder mehrstufig). Damit wird eine Verbreiterung des Aufschmelzbereiches und ein geringes Ausblühen von niedermolekularen Oligomeren erreicht. Eine Verbesserung des Rekristallisationsvermögens und damit der Standfestigkeit wurde auch mit diesem Verfahren nicht erreicht. Die daraus erhaltenen Produkte eignen sich somit für die Beschichtung und Kalanderverarbeitung, aber nicht für die Folienverarbeitung.

In EP-A 0 010 601 wird ein Verfahren zur kontinuierlichen Herstellung von Polyurethan- und Polyurethanharnstoff-Elastomeren in einer Schneckenmaschine mit speziellen Schneckenelementen und mit einer Komponentendosierung von einer oder zwei Monomerkomponenten in mindestens zwei Teilmengen beschrieben. Dabei wird sowohl ein NCO-Prepolymer (NCO-Überschuss) als auch ein OH-Prepolymer (OH-Überschuss; pro mol Polyol 0,3 bis 0,8 mol Diisocyanat) eingesetzt. Auch hier wird die Restmenge an Diisocyanat und der Kettenverlängerer wahlweise ein- oder mehrstufig zudosiert. Mit diesem Verfahren werden Reaktivitätsunterschiede in den Rohstoffen ausgeglichen und man erhält Elastomere mit reproduzierbarem Eigenschaftsniveau und mit verbesserter Grenzbiegespannung, Kerbschlagzähigkeit und Rückprallelastizität.

Aufgabe war es daher, ein Verfahren zur Verfügung zu stellen, mit dem es möglich ist, zu homogenen Formkörpern, insbesondere Folien verarbeitbare TPUs mit guter Standfestigkeit herzustellen.

Diese Aufgabe konnte überraschenderweise durch das erfindungsgemäße mehrstufige Herstellverfahren gelöst werden.

Gegenstand der Erfindung ist ein Verfahren zur Herstellung thermoplastisch verarbeitbarer Polyurethanelastomere (TPU) mit verbessertem Verarbeitungsverhalten, welches dadurch gekennzeichnet ist, dass man in einer mehrstufigen Umsetzung
A) eine oder mehrere lineare hydroxylterminierte Polyole a) mit einem gewichtsmittleren Molekulargewicht von 500 bis 5000 mit einem organischen Diisocyanat b) in einem Äquivalenzverhältnis von NCO-reaktiven Gruppen zu NCO-Gruppen von 1,1 : 1 bis 5,0 : 1 in einem Mischaggregat mit hoher Scherenergie mischt,
B) die in Stufe A) hergestellte Reaktionsmischung bei Temperaturen von > 80°C bis zu einem Umsatz von > 90%, bezogen auf die Komponente b), zu einem OH-terminierten Prepolymer umsetzt,
C) das in Stufe B) hergestellte OH-Prepolymer mit einem oder mehreren Kettenverlängeren c) mit einem Molekulargewicht von 60 bis 490 mischt,
D) das in der Stufe C) hergestellte Gemisch mit einer Menge an Komponente b) zum thermoplastischen Polyurethan umsetzt, so dass unter Berücksichtigung aller Komponenten ein Äquivalenzverhältnis von NCO-Gruppen zu NCO-reaktiven Gruppen von 0,9:1 bis 1,1:1 eingestellt wird,
wobei die Schritte A) bis D) gegebenenfalls in Gegenwart von Katalysatoren und gegebenenfalls unter Zugabe von 0 bis 20 Gew.-%, bezogen auf die Gesamtmenge TPU, Hilfs- und Zusatzstoffen durchgeführt werden.

Als organische Diisocyanate b) kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und aromatische Diisocyanate, wie 2,4-Toluylendiisocyanat, Gemische aus 2,4- und 2,6-Toluylendiisocyanat, 4,4'-Diphenylmethandiisocyanat, 2,4'- Diphenylmethandiisocyanat und 2,2'-Diphenylmethandiisocyanat, Gemische aus 2,4'- Diphenylmethandiisocyanat und 4,4'-Diphenylmethandiisocyanat, urethanmodifizierte flüssige 4,4'-Diphenylmethandiisocyanate und/oder 2,4'-Diphenylmethandiisocyanate, 4,4'-Diisocyanatodiphenyl-ethan-(1,2) und 1,5-Naphthylendiisocyanat. Vorzugsweise verwendet werden Diphenylmethandiisocyanat-Isomerengemische mit einem 4,4'-Diphenylmethandiisocyanatgehalt von größer als 96 Gew.-% und insbesondere 4,4'-Diphenylmethandiisocyanat, Hexamethylendiisocyanat und 4,4'-, 2,4'- und 2,2'-Dicyclohexylmethan-diisocyanat sowie die entsprechenden Isomerengemische. Die genannten Diisocyanate können einzeln oder in Form von Mischungen untereinander zur Anwendung kommen. Sie können auch zusammen mit bis zu 15 % (berechnet auf Gesamt-Diisocyanat), aber höchstens soviel eines Polyisocyanates, dass ein thermoplastisch verarbeitbares Produkt entsteht, verwendet werden. Beispiele sind Triphenylmethan-4,4',4"-triisocyanat und Polyphenyl-polymethylen-polyisocyanate.

Als Polyole a) werden lineare hydroxylterminierte Polyole eingesetzt. Produktionsbedingt enthalten diese oft kleine Mengen an nichtlinearen Verbindungen. Häufig spricht man daher auch von "im wesentlichen linearen Polyolen".

Als Komponente a) geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im wesentlichen linearen Polyether-Diole besitzen vorzugsweise zahlenmittlere Molekulargewichte M̅ₙ von 500 bis 5000.

Sie können sowohl einzeln als auch in Form von Mischungen untereinander zur Anwendung kommen

Geeignete Polyester-Diole (Komponente a)) können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren, wie ω-Hydroxycapronsäure oder Polymerisationsprodukte von Lactonen, z.B. gegebenenfalls substituierten ω-Caprolactonen.

Die Polyester-Diole besitzen zahlenmittlere Molekulargewichte M̅ₙ von 500 bis 5000. und können einzeln oder in Form von Mischungen untereinander zur Anwendung kommen

Als Kettenverlängerer c) werden niedermolekulare Diole, gegebenenfalls mit kleinen Mengen an Diaminen, mit einem Molekulargewicht von 60 bis 490 g/mol eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoff-atomen, wie z.B. Terephthalsäure-bis-ethylenglykol oder Terephthalsäure-bis-1,4-butandiol, Hydroxyalkylenether des Hydrochinons, wie z.B. 1,4-Di(β-hydroxyethyl)-hydrochinon, ethoxylierte Bisphenole, wie z.B. 1,4-Di(β-hydroxyethyl)-bisphenol A, (cyclo)aliphatische Diamine, wie z.B. Isophorondiamin, Ethylendiamin, 1,2-Propylen-diamin, 1,3-Propylen-diamin, N-Methyl-propylen-1,3-diamin, N,N'-Dimethyl-ethylendiamin und aromatische Diamine, wie z.B. 2,4-Toluylen-diamin und 2,6-Toluylen-diamin, 3,5-Diethyl-2,4-toluylen-diamin und/oder 3,5-Diethyl -2,6-toluylen-diamin und primäre mono-, di-, tri- und/oder tetraalkylsubstituierte 4,4'-Diaminodiphenylmethane. Bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen, z.B. als Kettenabbrecher oder Entformungshilfen, eingesetzt werden. Beispielhaft genannt seien Alkohole wie Oktanol und Stearylalkohol oder Amine wie Butylamin und Stearylamin.

Zur Herstellung der TPUs können die Aufbaukomponenten gegebenenfalls in Gegenwart von Katalysatoren, Hilfsmitteln und/oder Zusatzstoffen vorzugsweise in solchen Mengen zur Reaktion gebracht werden, dass das Äquivalenzverhältnis von NCO-Gruppen aus Komponente b) zur Summe der NCO-reaktiven Gruppen, insbesondere der OH- (bzw. NH-)Gruppen der niedermolekularen Verbindungen c) und der Polyole a) 0,9:1,0 bis 1,1:1,0, vorzugsweise 0,95:1,0 bis 1,05:1,0 beträgt.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und/oder Zinnverbindungen. Die Gesamtmenge an Katalysatoren in den TPU beträgt in der Regel etwa 0 bis 5 Gew.-%, bevorzugt 0 bis 1 Gew.-%, bezogen auf TPU.

Neben den Reaktionskomponenten und den Katalysatoren können auch Hilfsmittel und/oder Zusatzstoffe bis zu 20 Gew.%, bezogen auf die Gesamtmenge TPU, zugesetzt werden. Sie können in einer der Reaktionskomponenten, vorzugsweise in der Komponente a) gelöst werden oder auch ggf. nach erfolgter Reaktion in einem nachgeschalteten Mischaggregat, wie z.B. einem Extruder, zudosiert werden.

Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Ebenfalls können andere Elastomere wie Kautschuk, Ethylen/Vinylacetatcopolymere, Styrol/Butadiencopolymere sowie andere TPU's verwendet werden. Weiterhin zur Einarbeitung geeignet sind handelsübliche Weichmacher wie Phosphate, Phthalate, Adipate, Sebacate und Alkylsulfonsäureester.

Das erfindungsgemäße mehrstufige Herstellverfahren kann batchweise oder kontinuierlich erfolgen.

Die Komponenten der Stufe A) werden bei Temperaturen oberhalb ihres Schmelzpunktes, bevorzugt bei Temperaturen von 50 bis 220°C, in einem OH/NCO-Verhältnis von 1,1:1 bis 5,0:1 vermischt.

In der Stufe B) wird diese Mischung bei Temperaturen oberhalb von 80°C, bevorzugt zwischen 100°C und 250°C, im wesentlichen zum vollständigen Umsatz, vorzugsweise mehr als 90 % (bezogen auf die Isocyanat-Komponente), gebracht. Man erhält ein OH-terminiertes Prepolymer.

Diese Stufen werden vorzugsweise in einem Mischaggregat mit hoher Scherenergie durchgeführt. Beispielsweise können ein Rührer in einem Behälter oder ein Mischkopf bzw. ein hochtouriger Rohrmischer, eine Düse oder ein Statikmischer verwendet werden. Einsetzbare Statikmischer sind in Chem.-Ing. Techn. 52, Nr. 4, Seite 285 bis 291 sowie in "Mischen von Kunststoff und Kautschukprodukten", VDI-Verlag, Düsseldorf 1993, beschrieben. Beispielhaft seien die sogenannten SMX-Statikmischer der Firma Sulzer erwähnt.

In einer besonderen Ausführungsform kann für die Reaktion auch ein Rohr als Reaktor verwendet werden.

In einer besonderen Ausführungsform kann die Umsetzung auch in einem ersten Teil eines Mehrwellenextruders (z.B. eines Zweiwellenkneters (ZSK)) durchgeführt werden.

In der Stufe C) wird das OH-terminierte Prepolymer mit dem niedermolekularen Kettenverlängerer c) intensiv vermischt.

Die Einmischung des Kettenverlängerers erfolgt vorzugsweise in einem mit hoher Scherenergie arbeitenden Mischaggregat. Beispielhaft seien ein Mischkopf, ein Statikmischer, eine Düse oder ein Mehrwellenextruder genannt.

In der Stufe D) wird der Rest des Diisocyanates b) intensiv eingemischt und die Reaktion zum thermoplastischen Polyurethan zu Ende geführt, wobei insgesamt in den Stufen A) bis D) ein Äquivalentverhältnis von NCO-Gruppen zu NCO-reaktiven Gruppen von 0,9:1 bis 1,1:1 eingestellt wird.

Auch die letztgenannte Einmischung erfolgt vorzugsweise in einem mit hoher Scherenergie arbeitenden Mischaggregat, wie z.B. ein Mischkopf, ein Statikmischer, eine Düse oder ein Mehrwellenextruder.

Die Temperaturen der Extrudergehäuse werden so gewählt, dass die Reaktionskomponenten zum vollständigen Umsatz gebracht werden und die mögliche Einarbeitung der oben erwähnten Hilfsstoffe bzw. der weiteren Komponenten bei größtmöglicher Produktschonung durchgeführt werden kann.

Am Ende des Extruders wird granuliert. Man erhält gut zu verarbeitende Granulate.

Das nach dem erfindungsgemäßen Verfahren hergestellte TPU kann zu Spritzgießartikeln und zu homogenen Extrusionsartikeln, insbesondere Folien verarbeitet werden.

Die Erfindung soll anhand der nachfolgenden Beispiele näher erläutert werden.

### Beispiele

Verwendete Rohstoffe :
- PE 1000: Polyether mit einem Molekulargewicht von Mₙ = 1000 g/mol;
- PES 2250: Butandiol-adipat mit einem Molekulargewicht von Mₙ =2250 g/mol
- MDI: Diphenylmethan-4,4'-diisocyanat
- HDI: Hexamethylendiisocyanat-1,6
- TDI: Toluylendiisocyanat
- IPDI: Isophorondiisocyanat
- BUT: Butandiol- 1,4

### Herstellung (Batch) der TPU:

In einem Reaktionsgefäß wurde ein Polyol auf 180°C erhitzt. Im Polyol gelöst waren 0,4 Gew.-%, bezogen auf TPU, Bis-ethylenstearylamid (Wachs).

Unter Rühren (300 U/min) wurde die Teilmenge 1 des Diisocyanates (60°C) zugefügt. Man erhielt das Prepolymer (Umsatz > 90 mol%). Dem gerührten Prepolymer wurde entsprechend den Angaben in Tabelle 1
a) das Butandiol und anschließend unter intensiver Durchmischung die Teilmenge 2 des Diisocyanates (Versuch 2,3,4,6,10,11,12,13,14) oder
b) die Teilmenge 2 des Diisocyanates und anschließend unter intensiver Durchmischung das Butandiol (Versuch 1,5,7,9) oder
c) die Teilmenge 2 des Diisocyanates und gleichzeitig unter intensiver Durchmischung das Butandiol (Versuch 8 u. 15)
zugefügt.

Bei den Versuchen, in denen HDI eingesetzt wurde, wurden ca. 40-100 ppm, bezogen auf Polyol, Dibutylzinndilaurat (Katalysator) eingesetzt.

Nach ca. 20-60 sec. (je nach Diisocyanat) wurde das Reaktionsgemisch auf ein beschichtetes Blech gegossen und 30 Minuten bei 120°C getempert. Die Gießplatten wurden geschnitten und granuliert.

Die Mengen- und Verhältnisangaben sind der Tabelle 1 zu entnehmen.

### Spritzgißverarbeitung:

Das Granulat wurde in einer Spritzgießmaschine D 60 (32-Schnecke) der Firma Mannesmann aufgeschmolzen und zu Platten (125x50x2 mm) geformt.

Die Messung der Härte erfolgte nach DIN 53505.

### Folienverarbeitung:

Das Granulat wurde in einem Einwellen-Extruder 30/25D (Plasticorder PL 2000-6 der Firma Brabender) aufgeschmolzen (Dosierung 3 kg/h; 230 bis 195°C) und durch einen Flachfilmkopf zu einem Flachfilm extrudiert.

| **Beispiel** | **Stufe A+B** | **Stufe A+B** | **Stufe A+B** | **Stufe C** | **Stufe D** | **Härte TPU** | **Spritzgießplatte** | **Flachfilm** |
|---|---|---|---|---|---|---|---|---|
| | **1 mol Polyol** | **Mol Diisocyanat** | **OH : NCO Verhältnis** | | | **Shore A** | **Homogenität** | **Homogenität** |
| 1* | PES 2250 | 1,5 MDI | 0,67 | 2,1 mol MDI | 2,6 mol BUT | 85 | homogen | Sehr inhomogen |
| 2 | PES 2250 | 0,67 MDI | 1,50 | 2,6 mol BUT | 2,93 mol MDI | 85 | homogen | homogen |
| 3* | PES 2250 | 0,67 TDI | 1,50 | 2,6 mol BUT | 2,93 mol MDI | 82 | braun | Nicht zu verarbeiten |
| 4* | PES 2250 | 0,67 MDI | 1,50 | 2,6 mol BUT | 2,93 mol TDI | | Nicht zu verarbeiten | Nicht zu verarbeiten |
| 5* | PE 1000 | 1,5 MDI | 0,67 | 0,5 mol MDI | 1,0 mol BUT | 80 | homogen | inhomogen |
| 6 | PE 1000 | 0,67 MDI | 1,50 | 1,0 mol BUT | 1,33 mol MDI | 80 | homogen | homogen |
| 7* | PE 1000 | 0,67 MDI | 1,50 | 1,33 mol MDI | 1,0 mol BUT | 80 | homogen | Sehr inhomogen |
| 8* | PE 1000 | 0,67 MDI | 1,50 | 1,33 mol MDI | - | 80 | homogen | inhomogen |
| | | | | 1,0 mol BUT | | | | |
| 9* | PES 2250 | 1,50 mol HDI | 0,67 | 2,1 mol HDI | 2,6 mol BUT | 93 | sehr inhomogen | Sehr inhomogen |
| 10 | PES 2250 | 0,67 mol HDI | 1,50 | 2,6 mol BUT | 2,93 mol HDI | 93 | homogen | homogen |
| 11* | PES 2250 | 0,67 mol HDI | 1,50 | 2,6 mol BUT | 2,93 mol MDI | | Sehr inhomogen | |
| 12* | PES 2250 | 0,67 mol MDI | 1,50 | 2,6 mol BUT | 2,93 mol HDI | | Sehr inhomogen | |
| 13* | PES 2250 | 0,67 mol IPDI | 1,50 | 2,6 mol BUT | 2,93 mol HDI | | Sehr inhomogen | |
| 14* | PES 2250 | 0,67 mol HDI | 1,50 | 2,6 mol BUT | 2,93 mol IPDI | | Nicht zu verarbeiten | |
| 15* | PES 2250 | 0,67 mol HDI | 1,50 | 2,6 mol BUT | - | 94 | inhomogen | inhomogen |
| | | | | 2,93 mol HDI | | | | |

| | | | | | | | | |
|---|---|---|---|---|---|---|---|---|
| * nicht erfindungsgemäße Vergleichsbeispiele | | | | | | | | |

Die Ergebnisse aus der obigen Tabelle zeigen eindeutig, dass nur mit den erfindungsgemäß hergestellten TPU homogene Filme und Platten hergestellt werden können, wohingegen mit den TPU, die nach dem Stand der Technik als Vergleich hergestellt wurden, entweder nur inhomogene Filme erzeugt werden können oder das TPU gar nicht verarbeitet werden kann.

## Patentansprüche

1. Verfahren zur Herstellung thermoplastisch verarbeitbarer Polyurethanelastomere (TPU) mit verbessertem Verarbeitungsverhalten in einer mehrstufigen Umsetzung umfassend die Schritte
A) Mischen eines oder mehrerer linearer hydroxylterminierter Polyole a) mit einem gewichtsmittlerem Molekulargewicht von 500 bis 5000 mit einem organischen Diisocyanat b) in einem Äquivalenzverhältnis von NCO-reaktiven Gruppen zu NCO-Gruppen von 1,1:1 bis 5,0:1 in einem Mischaggregat mit hoher Scherenergie,
B) Umsetzung der in Stufe A) hergestellten Reaktionsmischung bei Temperaturen von > 80°C bis zu einem Umsatz von > 90%, bezogen auf die Komponente b), zu einem OH-terminierten Prepolymer,
C) Mischen des in Stufe B) hergestellten OH-Prepolymers mit einem oder mehreren Kettenverlängeren c) mit einem Molekulargewicht von 60 bis 490,
D) Umsetzen der in der Stufe C) hergestellten Mischung mit einer Menge an Komponente b) zum thermoplastischen Polyurethan, so dass unter Berücksichtigung aller Komponenten ein Äquivalenzverhältnis von NCO-Gruppen zu NCO-reaktiven Gruppen von 0,9:1 bis 1,1:1 eingestellt wird,
wobei die Schritte A) bis D) gegebenenfalls in Gegenwart von Katalysatoren und gegebenenfalls unter Zugabe von 0 bis 20 Gew.%, bezogen auf die Gesamtmenge TPU, Hilfs- und Zusatzstoffen durchgeführt werden.

2. Verfahren gemäß Anspruch 1, wobei als Polyole a) Polyesterpolyole, Polyetherpolyole, Polycarbonatpolyole oder Gemische aus diesen eingesetzt werden.

3. Verfahren gemäß Anspruch 1, wobei organisches Diisocyanat b) ein aliphatisches Diisocyanat, insbesondere Hexamethylendiisocyanat 1,6 oder 4,4'-, 2,4'- oder 2,2'-Dicyclohexylmethan-diisocyanat oder die entsprechenden Isomerengemische davon eingesetzt wird.

4. Verwendung der nach dem Verfahren gemäß den Ansprüchen 1 bis 5 hergestellten thermoplastisch verarbeitbaren Polyurethanelastomeren zur Herstellung von Spritzgießartikeln und Extrusionsartikeln.

## Claims

1. A process for the production of melt-processable polyurethane elastomers (TPUs) with improved processing characteristics in a multi-step reaction comprising the steps of
A) mixing one or more linear, hydroxyl-terminated polyols a) having a weight-average molecular weight of 500 to 5000 with an organic diisocyanate b) in an equivalence ratio of NCO-reactive groups to NCO groups of 1.1:1 to 5.0:1 in a mixing unit with high shear energy,
B) reacting the reaction mixture produced in step A) at temperatures of > 80°C to a conversion of > 90%, based on component b), to form an OH-terminated prepolymer,
C) mixing the OH prepolymer produced in step B) with one or more chain extenders c) having a molecular weight of 60 to 490,
D) reacting the mixture produced in step C) with a quantity of component b) to form the thermoplastic polyurethane, so that, taking all the components into account, an equivalence ratio of NCO groups to NCO-reactive groups of 0.9:1 to 1.1:1 is established,
steps A) to D) optionally being performed in the presence of catalysts and with the optional addition of 0 to 20 wt.% auxiliary substances and additives, based on the total quantity of TPU.

2. The process according to claim 1, wherein polyester polyols, polyether polyols, polycarbonate polyols or mixtures thereof are used as polyols a).

3. The process according to claim 1, wherein an aliphatic diisocyanate, particularly 1,6-hexamethylene diisocyanate or 4,4'-, 2,4'- or 2,2'-dicyclohexylmethane diisocyanate or the corresponding mixtures of isomers thereof, is used as organic diisocyanate b).

4. The use of the melt-processable polyurethane elastomers produced by the process according to claims 1 to 5 for the production of injection mouldings and extruded articles.

## Revendications

1. Procédé pour la préparation d'élastomères de polyuréthanne thermoplastiquement transformables (TPU) avec un comportement amélioré à la transformation dans une réaction à plusieurs étapes comprenant les étapes
A) de mélange d'un ou plusieurs polyols linéaires hydroxyle-terminés a) avec un poids moléculaire moyen en poids de 500 à 5000 avec un diisocyanate organique b) dans un rapport d'équivalent des groupes NCO-réactifs aux groupes NCO de 1,1:1 à 5,0:1 dans un agrégat de mélange avec une énergie de cisaillement élevée,
B) de réaction du mélange réactionnel préparé dans l'étape A) à des températures > 80°C jusqu'à un avancement > 90 %, rapporté au constituant b), en un prépolymère OH-terminé,
C) de mélange du OH-prépolymère préparé dans l'étape B) avec un ou plusieurs agents d'allongement de chaîne c) avec un poids moléculaire de 60 à 490,
D) de réaction du mélange préparé dans l'étape C) avec une quantité de constituant b) en un polyuréthanne thermoplastique de telle sorte, qu'en considérant tous les constituants, on ajuste un rapport d'équivalent des groupes NCO aux groupes NCO-réactifs de 0,9:1 à 1,1:1,
les étapes A) à D) étant éventuellement réalisées en présence de catalyseurs et éventuellement en ajoutant de 0 à 20 % en poids, rapportés au TPU global, d'additifs et d'auxiliaires.

2. Procédé selon la revendication 1, dans lequel on utilise comme polyols a) des polyesterpolyols, des polyétherpolyols, des polycarbonatepolyols ou des mélanges de ceux-ci.

3. Procédé selon la revendication 1, dans lequel on utilise comme diisocyanate organique b) un diisocyanate aliphatique, en particulier le diisocyanate d'hexaméthylène 1,6 ou le diisocyanate de 4,4'-, 2,4'- ou 2,2'-dicyclohexylméthane ou les mélanges d'isomères correspondants de ceux-ci.

4. Utilisation des élastomères de polyuréthanne thermoplastiquement transformables préparés selon le procédé selon les revendications 1 à 5 pour la préparation d'articles moulés par injection et d'articles d'extrusion.
